**Europäisches Patentamt**

**European Patent Office**

**Office européen des brevets**

(19)

(11) **EP 1 280 307 A2**

(12) # EUROPEAN PATENT APPLICATION

(43) Date of publication:
**29.01.2003 Bulletin 2003/05**

(51) Int Cl.⁷: **H04L 25/03**, H04L 27/26

(21) Application number: **02016255.8**

(22) Date of filing: **22.07.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI** | (72) Inventors:<br>• **Kitada, Kazutoshi**<br>  **Ota-ku, Tokyo (JP)**<br>• **Ohtaki, Yukio**<br>  **Ota-ku, Tokyo (JP)** |
| (30) Priority: **27.07.2001 JP 2001227813** | (74) Representative: **Hirsch, Peter, Dipl.-Ing.**<br>**Klunker Schmitt-Nilson Hirsch**<br>**Winzererstrasse 106**<br>**80797 München (DE)** |
| (71) Applicant: **ALPS ELECTRIC CO., LTD.**<br>**Tokyo 145-8501 (JP)** | |

(54) **OFDM receiving apparatus with reduced bit error rate**

(57) A delay equalizing unit includes an adding unit to which an OFDM-modulated signal is input, and a feedback unit for negatively feeding back a direct wave output from the adding unit to the adding unit. The direct wave negatively fed back by the feedback unit is delayed by the delay time of a delayed wave with respect to the direct wave, and is corrected so that the amplitude and phase of the direct wave negatively fed back by the feedback unit are equal to the amplitude and phase of the delayed wave input to the adding unit.

FIG. 1

EP 1 280 307 A2

**Description**

BACKGROUND OF THE INVENTION

1. Field of the Invention

The present invention relates to OFDM (Orthogonal Frequency Division Multiplexing) receiving apparatuses for receiving OFDM-modulated signals for use in terrestrial digital television broadcasts. In particular, the present invention relates to an OFDM receiving apparatus, suitable for on-board use in mobile units, in which delayed waves contained in an OFDM-modulated signal are removed to reduce the bit error rate after demodulation.

2. Description of the Related Art

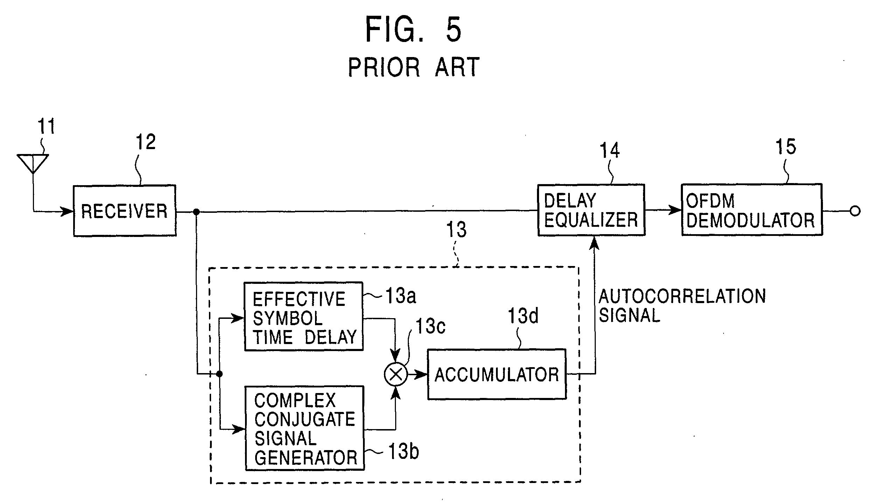

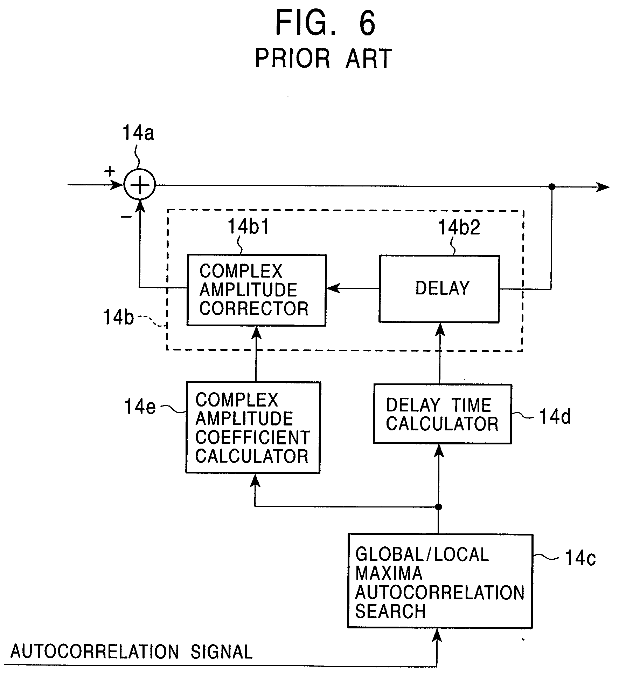

The configuration and operation of an OFDM receiving apparatus in the related art are now described with reference to Figs. 5 and 6. Fig. 5 is a block diagram of the overall OFDM receiving apparatus, and Fig. 6 is a block diagram specifically illustrating the configuration of a delay equalizer in the OFDM receiving apparatus shown in Fig. 5.

An OFDM-modulated signal received by an antenna 11 is amplified and frequency-converted in a receiver 12. The resulting signal is further converted into a pair of digital baseband signals, which stand in orthogonal relation to each other, by an analog-to-digital (A/D) converter (not shown). It is assumed herein that the OFDM signal contains a direct wave directly delivered from a transmission antenna, and a delayed wave that is delivered after being reflected by an obstruction such as a building, and the converted digital baseband signals also include a direct wave component and a delayed wave component. In the following description, however, the overall digital baseband signal is simply referred to as an "OFDM-modulated signal", unless specifically noted.

The OFDM-modulated signal output from the receiver 12 is input to both an autocorrelation detector 13 and a delay equalizer 14.

The autocorrelation detector 13 detects the periodicity of the OFDM-modulated signal. For this purpose, the OFDM-modulated signal is input to both an effective symbol time delay unit 13a and a complex conjugate signal generation unit 13b. The effective symbol time delay unit 13a delays the input OFDM-modulated signal by the length of an effective symbol in one transmitted symbol for the OFDM-modulated signal. The complex conjugate signal generation unit 13b generates a signal (complex conjugate signal) that is the conjugate of the input OFDM-modulated signal (one of the pair of orthogonal digital baseband signals is used as the real part and the other as the imaginary part). The OFDM-modulated signal delayed by the effective symbol time delay unit 13a and the complex conjugate signal generated by the complex conjugate signal generation unit 13b are multiplied in a multiplier 13c.

The multiplied result by the multiplier 13c is accumulated for a predetermined time by an accumulating unit 13d, and the accumulated result becomes an autocorrelation signal. The autocorrelation signal consists of two parts, i.e., the real part and the imaginary part, as described above. The imaginary-part autocorrelation signal is significantly smaller than the real-part autocorrelation signal, and the real-part autocorrelation signal can be used to detect the periodicity of the OFDM-modulated signal. The real-part autocorrelation signal exhibits some peaks for one transmitted symbol period of the OFDM-modulated signal, which are used to detect the periodicity of the OFDM-modulated signal. The autocorrelation peak (global maximum) that appears first corresponds to the amplitude of the direct wave, while the autocorrelation peak (local maximum) which appears later than the first peak corresponds to the amplitude of the delayed wave. A plurality of delayed waves would provide a plurality of local maximums. Since a delayed wave arrives at the antenna 11 later than the direct wave, the delay time of the delayed wave with respect to the direct wave can be found based on the difference between the time when the global maximum appears and the time when the local maximum appears.

If the delayed wave contained in the OFDM-modulated signal is delayed longer than a guard interval period (which has been inserted during modulation) in one transmitted symbol, the delay equalizer 14 removes the delayed wave and outputs only the direct wave. As shown in Fig. 6, the delay equalizer 14 includes an adding unit 14a having a first input terminal (+) to which the OFDM-modulated signal containing the delayed wave is input, and a feedback unit 14b provided between the output terminal of adding unit 14a and a second input terminal (-) of the adding unit 14a. The feedback unit 14b has a delay unit 14b1 and a complex amplitude correction unit 14b2.

The delay equalizer 14 includes a global/local maxima autocorrelation search unit 14c to which the autocorrelation signal is input, and two calculation units, namely, a delay time calculation unit 14d and a complex amplitude coefficient calculation unit 14e, which are connected to the global/local maxima autocorrelation search unit 14c.

The global/local maxima autocorrelation search unit 14c searches for the global and local maximums of the input autocorrelation signal, and for the times when the global and local maximums appear, and sends a signal containing that information to the delay time calculation unit 14d. The global and local maximums may also be found using the real-part autocorrelation signal. Then, the delay time calculation unit 14d determines the delay time of the delayed wave based on the difference between the time when the global maximum appears and the time when the local maximum appears, and sends a signal containing that information to the delay unit 14b2 in the feedback unit 14b.

The delay unit 14b2 delays the OFDM-modulated signal output from the adding unit 14a, which substantially consists of the direct wave with the delayed wave removed therefrom, by the delay time of the delayed wave. The delay unit 14b2 then inputs the result to the complex amplitude correction unit 14b1.

The global/local maxima autocorrelation search unit 14c further finds the value (autocorrelation value) of the imaginary-part autocorrelation signal. More strictly, the values of the imaginary-part autocorrelation signal at the times when the global and local maximums of the real-part autocorrelation signal appear are found; however, as described above, if a substantially constant value of the imaginary-part autocorrelation signal is exhibited for one transmitted symbol, the mean value thereof may be used. In any event, the global/local maxima autocorrelation search unit 14c sends a signal containing the following information to the complex amplitude coefficient calculation unit 14e: the global maximum Ia (for the direct wave) and the local maximum Ib (for the delayed wave) of the real-part autocorrelation signal, and values Qa and Qb of the imaginary-part autocorrelation signal at the times when the global maximum and the local maximum appear, respectively. That is, the value Qa is for the direct wave, and the value Qb for the delayed wave.

The complex amplitude coefficient calculation unit 14e determines a vector sum A of the global maximum Ia of the real-part autocorrelation signal and the value Qa of the imaginary-part autocorrelation signal with respect to the direct wave, and also finds a vector sum B of the local maximum Ib of the real-part autocorrelation signal and the value Qb of the imaginary-part autocorrelation signal with respect to the delayed wave. It is to be understood that the vector sum A for the direct wave indicates the amplitude of the direct wave in the OFDM-modulated signal input to the adding unit 14a, and the vector sum B for the delayed wave indicates the amplitude of the delayed wave in the OFDM-modulated signal. The complex amplitude coefficient calculation unit 14e finds the vector sum A to B ratio K (=B/A). The ratio K is used as a complex amplitude coefficient, which is input to the complex amplitude correction unit 14b1 in the feedback unit 14b.

The complex amplitude correction unit 14b1 corrects the amplitude (A) of the OFDM-modulated signal (direct wave) input from the delay unit 14b2 so that the amplitude (A) is multiplied by K (= B/A). As a result, the amplitude of the direct wave output from the complex amplitude correction unit 14b1 becomes B, which is negatively fed back to the adding unit 14a through the second input terminal (-) thereof. The negatively fed direct wave has been delayed by the delay time of the delayed wave, and therefore coincides in time with the delay wave in the OFDM-modulated signal input to the first input terminal (+) of the adding unit 14a. Thus, the delayed wave is cancelled in the adding unit 14a, so that the OFDM-modulated signal which consists of the direct wave with the delayed wave removed therefrom is output from the adding unit 14a.

A delayed wave which is delayed not longer than the guard interval period would not interfere with the direct wave. Thus, there is no need to remove the delayed wave using the negative feedback technique described above.

The OFDM-modulated signal output from the delay equalizer 14 is input to an OFDM demodulator 15, where the guard interval signal inserted during modulation is removed and the effective symbol signal is extracted. The resulting signal is demodulated after being fast Fourier transformed.

As mentioned above, in the OFDM receiving apparatus in the related art, the delayed wave is removed based on both the amplitude ratio (the amplitude ratio expressed by vector sums) between the direct wave and the delayed wave in the received OFDM-modulated signal and the delay time of the delayed wave, but not based on the direct wave and the delayed wave. Thus, the delayed wave cannot be successfully removed.

SUMMARY OF THE INVENTION

Accordingly, it is an object of the present invention to consider the relative phases of a direct wave and a delayed wave in addition to the amplitude ratio therebetween and the delay time of the delayed wave in order to successfully remove the delayed wave, thereby reducing the bit error rate after demodulation.

To this end, the present invention provides an OFDM receiving apparatus for receiving an OFDM-modulated signal, the OFDM-modulated signal containing a direct wave and a delayed wave. The OFDM receiving apparatus includes a delay equalizing unit for removing the delayed wave from the OFDM-modulated signal to output only the direct wave, and an OFDM demodulating unit for demodulating the direct wave output from the delay equalizing unit. The delay equalizing unit includes an adding unit to which the OFDM-modulated signal is input, and a feedback unit for negatively feeding back the direct wave output from the adding unit to the adding unit. The direct wave negatively fed back by the feedback unit is delayed by the delay time of the delayed wave with respect to the direct wave, and is corrected so that the amplitude and phase of the negatively fed direct wave are equal to the amplitude and phase of the delayed wave input to the adding unit, respectively.

Consequently, the delayed wave can be completely removed, thus allowing the bit error to be prevented after demodulation.

The OFDM receiving apparatus may further include an autocorrelation detecting unit and a path correlation detecting unit. The autocorrelation detecting unit detects the amplitude of the direct wave and the amplitude of the delayed wave in the OFDM-modulated signal, and detects the times when the amplitudes become local maximums. The path correlation detecting unit detects a phase difference between the direct wave and the delayed wave. The feedback unit may include a delay unit and an amplitude correction unit. The delay time of the delay unit is set so as to be equal to the difference between the times when the amplitudes become local maximums. The amplitude correction unit corrects the amplitude and phase of the negatively fed direct wave using both the ratio of the amplitude of the direct wave to the amplitude of the delayed wave and the phase difference.

This allows the amplitude and phase of the fed direct wave to coincide with the amplitude and phase of the delayed wave input to the adding unit.

The delay equalizing unit may further include a delay time calculating unit for calculating the delay time from the times when the amplitudes become local maximums, and a correction coefficient calculating unit for calculating a correction coefficient for the correction. This makes it easy to set the delay time of the delay unit.

The autocorrelation detecting unit may detect the amplitudes in the form of complex numbers. The correction coefficient calculating unit may calculate first and second correction coefficients. The first correction coefficient is used to make the magnitude of the real part in the amplitude of the direct wave coincide with the magnitude of the real part in the amplitude of the delayed wave. The second correction coefficient is used to make the magnitude of the imaginary part in the amplitude of the direct wave coincide with the magnitude of the imaginary part in the amplitude of the delayed wave. Using these two correction coefficients, the amplitude of the fed direct wave can be corrected so as to be equal to that of the delayed wave in the form of complex numbers.

BRIEF DESCRIPTION OF THE DRAWINGS

Fig. 1 is a circuit diagram of an OFDM receiving apparatus according to the present invention;

Fig. 2 is a waveform of an autocorrelation signal in the OFDM receiving apparatus according to the present invention;

Fig. 3 is a waveform of a path autocorrelation signal in the OFDM receiving apparatus according to the present invention;

Fig. 4 is a circuit diagram of a delay equalizer in the OFDM receiving apparatus according to the present invention;

Fig. 5 is a circuit diagram of an OFDM receiving apparatus in the related art; and

Fig. 6 is a circuit diagram of a delay equalizer in the OFDM receiving apparatus in the related art.

DESCRIPTION OF THE PREFERRED EMBODIMENTS

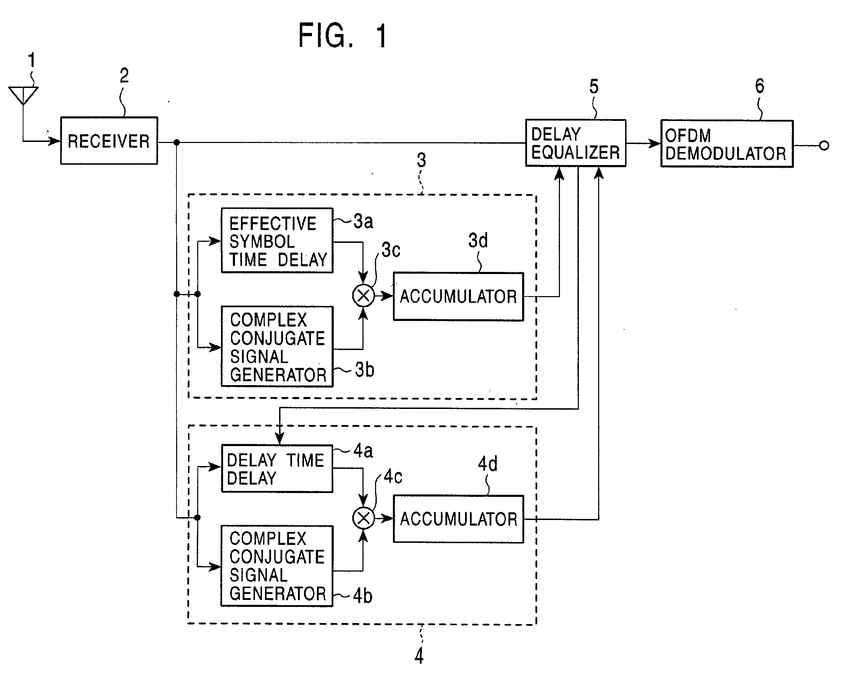

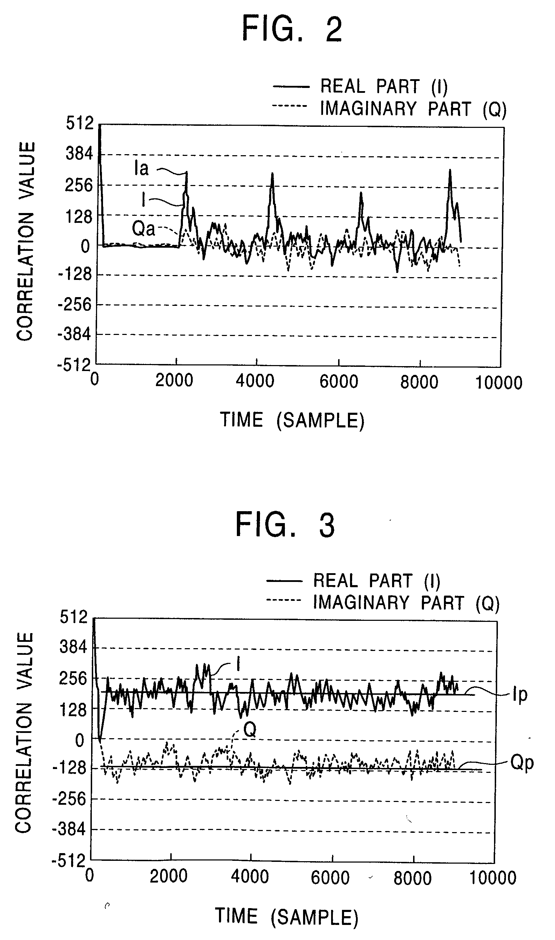

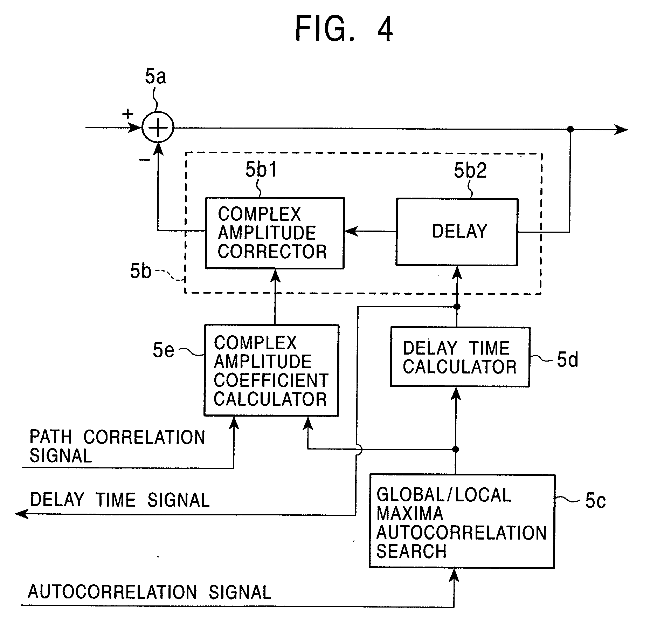

The configuration and operation of an OFDM receiving apparatus according to the present invention are now described with reference to Figs. 1 to 4. Fig. 1 is a block diagram of the overall OFDM receiving apparatus. Figs. 2 and 3 are waveforms of an autocorrelation signal and a path correlation signal, respectively. Fig. 4 is a block diagram specifically illustrating the configuration of a delay equalizer in the OFDM receiving apparatus shown in Fig. 1.

An OFDM-modulated signal received by an antenna 1 is amplified and frequency-converted in a receiver 2. The resulting signal is further converted into a pair of digital baseband signals, which stand in orthogonal relation to each other, by an analog-to-digital (A/D) converter (not shown). It is assumed herein that the received OFDM signal contains a direct wave directly delivered from a transmission antenna, and a delayed wave that is delivered after being reflected by an obstruction such as a building, and the converted digital baseband signals also include a direct wave component and a delayed wave component. In the following description, however, the overall digital baseband signal is simply referred to as an "OFDM-modulated signal", unless specifically noted.

The OFDM-modulated signal output from the receiver 2 is input to an autocorrelation detector 3, a path correlation detector 4, and a delay equalizer 5.

One transmitted symbol for the OFDM-modulated signal is formed of a guard interval which provides a resistance to interference of the delayed wave, and an effective symbol in which an information signal of interest to be transmitted is inserted.

The autocorrelation detector 3 detects the periodicity of the OFDM-modulated signal. For this purpose, the OFDM-modulated signal is input to both an effective symbol time delay unit 3a and a complex conjugate signal generation unit 3b. The effective symbol time delay unit 3a delays the input OFDM-modulated signal by the effective symbol period. The complex conjugate signal generation unit 3b generates a signal (complex conjugate signal) that is the conjugate of the input OFDM-modulated signal (one of the pair of orthogonal digital baseband signals is used as the real part and the other as the imaginary part). The OFDM-modulated signal delayed by the effective symbol time delay unit 3a and the complex conjugate signal generated by the complex conjugate signal generation unit 3b are multiplied in a multiplier 3c.

The multiplied result by the multiplier 3c is accumulated for a predetermined time by an accumulating unit 3d, and the accumulated result becomes an autocorrelation signal that iterates every transmitted symbol. As depicted in Fig. 2, the autocorrelation signal consists of two parts I and Q, i.e., the real part and the imaginary part, respectively, as described above. The imaginary-part autocorrelation signal is significantly smaller and varies for one transmitted symbol period less than the real-part autocorrelation signal. The real-part autocorrelation signal exhibits some peaks for one transmitted symbol period of the OFDM-modulated signal, which are used to detect the periodicity of the OFDM-modulated signal. The autocorrelation peak (global maximum) that appears first corresponds to the amplitude of the direct wave, while the autocorrelation peak (local maximum) which appears later than the first peak corresponds to the amplitude of the delayed wave. A plurality of delayed waves would provide a plurality of local maximums. Since a delayed wave arrives at the antenna 1 later than the direct wave, the delay time of the delayed wave with respect to the direct wave can be found based on the difference between the time when the global maximum appears and the time when the local maximum appears.

The path correlation detector 4 detects the phase difference between the direct wave and the delayed wave which is caused by the difference in transmission route (path) therebetween. For this purpose, the OFDM-modulated signal is input to both a delay time delay unit 4a and a complex conjugate signal generation unit 4b. The delay time delay unit 4a delays the input OFDM-modulated signal by the delay time of the delayed wave with respect to the direct wave. The complex conjugate signal generation unit 4b generates a signal (complex conjugate signal) that is that conjugate of the input OFDM-modulated signal (one of the pair of orthogonal digital baseband signals is used as the real part and the other as the imaginary part). The complex conjugate signal generation unit 4b has the same configuration as that of the complex conjugate signal generation unit 3b in the autocorrelation detector 3. The OFDM-modulated signal delayed by the delay time delay unit 3a and the complex conjugate signal generated by the complex conjugate signal generation unit 4b are multiplied in a multiplier 4c.

The multiplied result by the multiplier 4c is accumulated for a predetermined time by an accumulating unit 4d, and the accumulated result becomes a path correlation signal. As depicted in Fig. 3, the path correlation signal consists of two parts I and Q, i.e., the real part and the imaginary part, respectively. Both parts of the path correlation signal exhibit substantially constant path correlation values for one transmitted symbol period such that the arc tangent of mean path correlation $Ip$ for the real part and mean path correlation $Qp$ for the imaginary part, i.e., arc tan $Qp / Ip$, corresponds to the phase difference between the direct wave and the delayed wave.

If the delayed wave contained in the OFDM-modulated signal is delayed longer than the guard interval period (which has been inserted during modulation) in one transmitted symbol, the delay equalizer 5 removes the delayed wave and outputs only the direct wave. As shown in Fig. 4, the delay equalizer 5 includes an adding unit 5a having a first input terminal (+) to which the OFDM-modulated signal containing the delayed wave is input, and a feedback unit 5b provided between the output terminal of adding unit 5a and a second input terminal (-) of the adding unit 5a. The feedback unit 5b has a delay unit 5b1 and a complex amplitude correction unit 5b2.

The delay equalizer 5 includes a global/local maxima autocorrelation search unit 5c to which the autocorrelation signal is input, and two calculation units, namely, a delay time calculation unit 5d and a complex amplitude coefficient calculation unit 5e, which are connected to the global/local maxima autocorrelation search unit 5c.

The global/local maxima autocorrelation search unit 5c searches for times T1 and T2 when the global and local maximums of the input autocorrelation signal appear, and sends a signal containing that information to the delay time calculation unit 5d. The global and local maximums may be the global maximum Ia and the local maximum Ib of the real-part autocorrelation signal, respectively. Then, the delay time calculation unit 5d calculates the delay time of the delayed wave from the times T1 and T2 by (T1 - T2), and sends a signal containing that information to the delay unit 5b2 in the feedback unit 5b. The signal for the determined delay time (T1 - T2) is also sent to the delay time delay unit 4a in the path correlation detector 4, and that delay time is thus set.

The delay unit 5b2 delays the OFDM-modulated signal output from the adding unit 5a, which substantially consists of the direct wave with the delayed wave removed therefrom, by the delay time (T1 - T2) of the delayed wave. The delay unit 5b2 then inputs the result to the complex amplitude correction unit 5b1. Therefore, the direct wave negatively fed back to the adding unit 5a coincides in time with the delayed wave in the original OFDM-modulated signal input to the adding unit 5a.

The global/local maxima autocorrelation search unit 5c finds the global maximum Ia of the real-part autocorrelation signal and the value Qa (or the mean value) of the imaginary-part autocorrelation signal, and outputs the results to a complex amplitude coefficient calculation unit 5e.

A path correlation signal indicating the path correlation Ip for the real part and the path correlation Qp for the imaginary part is input to the complex amplitude coefficient calculation unit 5e from the path correlation detector 4. The complex amplitude coefficient calculation unit 5e determines a complex amplitude coefficient based on the four correlation values, namely, Ia, Qa, Ip, and Qp. The complex amplitude correction unit 5b2 uses the complex amplitude coefficient to correct the complex amplitude of the direct wave output from the delay unit 5b1 so that the complex amplitude of the direct wave coincides with the complex amplitude of the delayed wave in the OFDM-modulated signal input to the adding unit 5a.

The determination of complex amplitude coefficient and the correction for complex amplitude are now described. First, the complex amplitude of the direct wave in the OFDM-modulated signal input to the adding unit 5a is expressed by general equation $(\alpha + j\beta)$, where j denotes the imaginary number unit, and the complex amplitude of the delayed wave is expressed by general equation $(\gamma + j\delta)$. The correction for complex amplitude means that the general equation $(\alpha + j\beta)$ is transformed into the general equation $(\gamma + j\delta)$ so that the complex amplitude of the fed direct wave is multiplied by the complex amplitude coefficient to modify the signal intensity and phase, which is then transformed into the complex amplitude of the delayed wave.

More specifically, the general equation for the complex amplitude coefficient is expressed by $(a + jb)$, in which the real part "a" denotes a first correction coefficient and the imaginary part "b" denotes a second correction coefficient. Then, the complex amplitude of the delayed wave is expressed by Equation (1), and the complex amplitude coefficient is defined as Equation (2):

$$\gamma + j\delta = (a + jb)(\alpha + j\beta) \qquad (1)$$

$$a + jb = \frac{\gamma + j\delta}{\alpha + j\beta} \qquad (2)$$

Therefore, the complex amplitude coefficient is expressed as the ratio of the complex amplitude for the delayed wave to the complex amplitude for the direct wave.

Since the relation does not change if the denominator and numerator of Equation (2) are multiplied by the same value, both the denominator and the numerator are multiplied by complex conjugate $(\alpha + j\beta)$ in order to derive the relation with the four correlation values Ia, Qa, Ip, and Qp. Then, the complex amplitude coefficient is transformed into the following equation:

$$a + jb = \frac{(\gamma + j\delta)(\alpha - j\beta)}{\alpha^2 + \beta^2} \qquad (3)$$

The denominator of Equation (3) indicates the power of the direct wave, which is proportional to the global maximum autocorrelation. The numerator of Equation (3) indicates the correlated power between the direct wave and the delayed wave, which is proportional to the path correlation value. From this relationship, the complex amplitude coefficient is determined by making the numerator of Equation (3) correspond to value (Ip + jQp), which is a complex representation of the mean values (Ip, Qp) of the path correlation signal output from the path correlation detector 4, and by making the denominator correspond to value (Ia + jQa), which is a complex representation of the global maximums (Ia, Qa) of the autocorrelation signal output from the global/local maxima search unit 5c.

Specifically, the complex amplitude coefficient $(a + jb)$ is expressed by Equation (4) in which the real part "a" and the imaginary part "b" are found by Equations (5) and (6), respectively, using known mathematical calculations:

$$a + jb = \frac{Ip + jQp}{Ia + jQa} \qquad (4)$$

$$a = \frac{Ia \cdot Ip + Qa \cdot Qp}{Ia^2 + QA^2} \qquad (5)$$

$$b = \frac{Ia \cdot Qp - Ip \cdot Qa}{Ia^2 + QA^2} \qquad (6)$$

Accordingly, the complex amplitude coefficient determined using both the global maximums of the autocorrelation signal and the mean values of the path correlation signal can be used to transform the complex amplitude $(\alpha + j\beta)$ for the negatively fed direct wave into the complex amplitude $(\gamma + j\delta)$ for the input delayed wave. This enables the delayed wave to be completely cancelled or eliminated in the adding unit 5a.

**Claims**

1. An OFDM receiving apparatus for receiving an OFDM-modulated signal, the OFDM-modulated signal containing a direct wave and a delayed wave, the apparatus comprising:

   delay equalizing means for removing the delayed wave from the OFDM-modulated signal to output only the direct wave; and
   OFDM demodulating means for demodulating the direct wave output from said delay equalizing means,
   said delay equalizing means including:

   adding means to which the OFDM-modulated signal is input; and
   feedback means for negatively feeding back the direct wave output from the adding means to the adding means,

   wherein the direct wave negatively fed back by the feedback means is delayed by the delay time of the delayed wave with respect to the direct wave, and is corrected so that the amplitude and phase of the direct wave negatively fed back by the feedback means are equal to the amplitude and phase of the delayed wave input to the adding means, respectively.

2. An OFDM receiving apparatus according to claim 1, further comprising:

autocorrelation detecting means for detecting the amplitude of the direct wave and the amplitude of the delayed wave in the OFDM-modulated signal, and for detecting the times when the amplitudes become local maximums; and path correlation detecting means for detecting a phase difference between the direct wave and the delayed wave,

wherein the feedback means is formed of delay means and amplitude correcting means, the delay time of the delay means is set so as to be equal to the difference between the times when the amplitudes become local maximums, and the amplitude correcting means corrects the amplitude and phase of the negatively fed direct wave using both the ratio of the amplitude of the direct wave to the amplitude of the delayed wave and the phase difference.

3. An OFDM receiving apparatus according to claim 2, wherein said delay equalizing means further includes:

delay time calculating means for calculating the delay time from the times when the amplitudes become local maximums; and correction coefficient calculating means for calculating a correction coefficient for the correction.

4. An OFDM receiving apparatus according to claim 3, wherein the autocorrelation detecting means detects the amplitudes in the form of complex numbers; and the correction coefficient calculating means calculates first and second correction coefficients, the first correction coefficient being used to make the magnitude of the real part in the amplitude of the direct wave coincide with the magnitude of the real part in the amplitude of the delayed wave, the second correction coefficient being used to make the magnitude of the imaginary part in the amplitude of the direct wave coincide with the magnitude of the imaginary part in the amplitude of the delayed wave.

# FIG. 1

# FIG. 2

# FIG. 3

# FIG. 4

PATH CORRELATION SIGNAL

DELAY TIME SIGNAL

AUTOCORRELATION SIGNAL

# FIG. 5
## PRIOR ART

EP 1 280 307 A2

# FIG. 6
## PRIOR ART